# EUROPÄISCHE PATENTSCHRIFT

(11) **EP 0 919 369 B1**
(45) Veröffentlichungstag und Bekanntmachung des Hinweises auf die Patenterteilung: **07.08.2002**
(21) Anmeldenummer: 98118611.7
(22) Anmeldetag: 01.10.1998
(51) Int. Cl.: B32B 31/12, B29C 63/02

(54) **Verfahren zum Herstellen von Laminiertaschen und Laminiertasche**
Method for producing a protection cover and protection cover
Procédé pour fabriquer une pochette de protection, et pochette de protection

(30) Priorität: 09.10.1997 DE 19744595
(43) Veröffentlichungstag der Anmeldung: 02.06.1999
(73) Patentinhaber: HETZEL GmbH & Co. KG, 73635 Rudersberg-Steinenberg (DE)
(72) Erfinder: Senges, Harald, 73635 Obersteinenberg (DE)
(74) Vertreter: Patentanwälte Ruff, Wilhelm, Beier, Dauster & Partner

(56) Entgegenhaltungen:
- WO-A-96/32247
- WO-A-97/18274
- DE-A- 3 130 430
- FR-A- 2 059 703
- US-A- 4 199 391
- US-A- 5 073 076
- Römpp Chemie Lexikon, Band Pl-S (1992); 9. Auflage; Georg Thieme Verlag, Stuttgart (DE); S. 4037

## Beschreibung

Laminiertaschen dienen dazu, ein Stück Papier, beispielsweise einen Ausweis, vollständig in Kunststoff-Folie einzuschließen. Die Laminiertaschen werden in der Regel von zwei Stücken Folie gebildet, die längs einer Stirnkante miteinander verbunden sind. Die Verbindung kann eine nachträgliche Verbindung zweier Stücke Folie oder auch eine Faltung eines größeren Stücks Folie sein. In diese Laminiertaschen wird dann der Papierbogen eingelegt. Anschließend erfolgt mit einem Laminierapparat die eigentliche Laminierung.

Bei den bekannten Laminiertaschen wird eine Folie verwendet, die aus zwei Schichten besteht. Auf die eine Seite wird dann der Kleber aufgebracht, so daß die beiden Abschnitte der Folie, die zusammen die Laminiertasche bilden, jeweils aus drei Schichten bestehen.

Es ist bereits bekannt, Folien mit sich selbst und anderen Substraten mittels lösungsmittelfreien Klebern zu verkleben, die zur Verarbeitung auf Temperaturen auf etwa 100 °c gebracht werden und auf die Folie aufgetragen feuchtigkeitshärtend eine Verklebung ergeben (DE 31 30 430-A1).

Weiterhin ist eine Technologie beim Laserdrucken bekannt, bei dem ein Blatt zwischen zwei Blätter aus synthetischem Laminiermaterial eingeklebt werden. Als Kleber dient ein Kleber, der bei Raumtemperatur noch nicht klebt, aber bei den in dem Laserdrucker erzeugten Temperaturen seine Klebfähigkeit erhält (WO 97/18274).

Ebenfalls bekannt ist eine Vorrichtung (WO 96/32247), bei der ein Blatt mit Informationen zwischen zwei Deckfolien eingeklebt wird. Als Klebeschicht zwischen den Deckschichten wird eine Schicht aus Polyethylen verwendet.

Der Erfindung liegt die Aufgabe zugrunde, ein Verfahren zum Herstellen von Laminiertaschen vorzuschlagen, das verbesserte Ergebnisse ermöglicht.

Der Erfindung liegt ebenfalls die Aufgabe zugrunde, eine verbesserte Laminiertasche zu schaffen.

Zur Lösung dieser Aufgabe schlägt die Erfindung ein Verfahren mit den im Anspruch 1 genannten Merkmalen vor. Die Erfindung schlägt ebenfalls eine Laminiertasche vor, die durch das Verfahren nach dem Anspruch 1 hergestellt werden kann. Weiterbildungen der Erfindung sind Gegenstand von Unteransprüchen, deren Wortlaut ebenso wie der Wortlaut der Zusammenfassung durch Bezugnahme zum Inhalt der Beschreibung gemacht wird.

Die Erfindung verwendet als Ausgangsmaterial eine einzelne Schicht Folie, auf die eine Schicht Kleber aufgebracht wird. Zwei solche mit Kleber beschichtete Folienabschnitte bilden dann eine Laminiertasche, in die ein Bogen Papier eingelegt und laminiert werden kann. Das Laminieren geschieht unter gleichzeitiger Anwendung von Druck und Hitze.

In der Erfindung ist vorgesehen, daß der Kleber auf mindestens einem der beiden Folienabschnitte ungleichmäßig aufgetragen wird, insbesondere häufchenweise oder linienweise. Der Kleber verteilt sich dann gleichmäßig, ohne daß Luftblasen entstehen.

Erfindungsgemäß kann als Material für die Folie insbesondere Polypropylen verwendet werden, das besonders umweltfreundlich ist.

Ebenfalls möglich ist die Verwendung von Polyäthylen als Folienmaterial.

Erfindungsgemäß kann vorgesehen sein, daß Folien mit einem Elastizitätsmodul verwendet werden, der zwischen 100 und 2000 N/mm² liegt.

Als Kleber kommt ein thermoplastischer Kleber in Frage, ebenso ein wasserlöslicher Kleber oder auch ein Dispersionskleber.

Die Viskosität des Klebers kann vorzugsweise zwischen 100 und etwa 2000 mPas liegen.

Der Kleber kann in Weiterbildung der Erfindung insbesondere in einem Rakelverfahren auf getragen werden.

Ebenfalls möglich ist das Aufsprühen des Klebers oder das Auftragen des Klebens mit einer Walze. Auch Kombinationen dieser drei Möglichkeiten zum Aufbringen des Klebers auf die Folie sind möglich.

Insbesondere kann erfindungsgemäß vorgesehen sein, daß pro m² zwischen 5 und 40 g Kleber aufgetragen werden.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: schematisch die Anordnung eines einzulaminierenden Papierbogens zwischen zwei gleich großen Stücken Folie,
- Fig. 2: eine Laminiertasche, bei der beide Folienabschnitte längs einer Stirnkante miteinander verbunden sind.

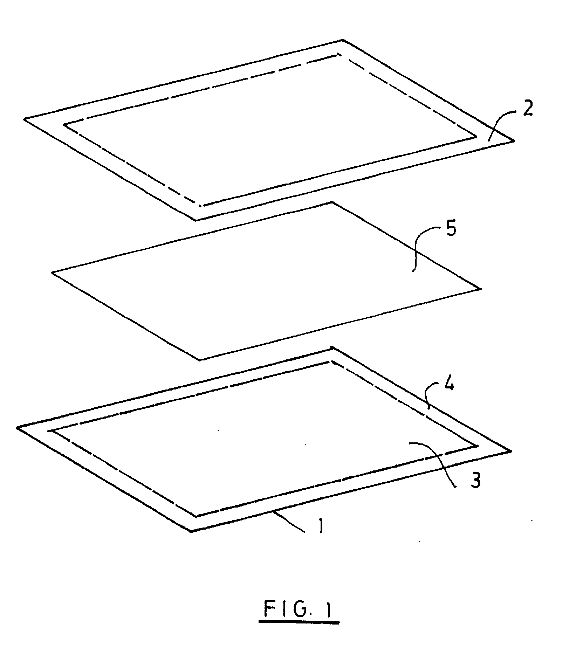

Die Fig. 1 zeigt zwei Stücke Folie 1, 2. Beide Stücke Folie sind gleich groß und gleich dick und bestehen vorzugsweise aus dem gleichen Material, insbesondere Polypropylen oder Polyäthylen. Jedes Stück Folie wird auf einer Seite bis zum Rand mit einer dünnen Schicht 3 Kleber versehen. Die Kleberschicht kann mit einer Rakel, einer Walze, einem Pinsel oder dgl. aufgebracht werden, sie kann auch aufgesprüht werden. Die Stücke Folie 1, 2 werden so angeordnet, daß die mit Kleber beschichteten Seiten einander zugewandt sind. In der Figur ist dies bei dem unteren Stück Folie die Oberseite, und bei dem oberen Stücke Folie die Unterseite. Zwischen beide Stücke Folie wird ein Papierbogen 5 gebracht und so angeordnet, wie dies durch die gestrichelte Linie angedeutet ist. Er ist also überall von einem Rand umgeben. Die drei ausgerichteten Teile werden aufeinander gelegt und laminiert. Der Bogen 5 ist dadurch zwischen den Folien so festgelegt, daß eine Manipulation nicht möglich ist.

Beim Laminieren wird die Anordnung aus den beiden Folienabschnitten mit dem dazwischenliegenden Stück Papier erwärmt und gepreßt, so daß der Kleber aktiv wird und eine Verklebung zwischen Folie und Papier einerseits und zwischen den beiden Folien längs des Randes miteinander erfolgt. Der Rand 4 wird so gewählt, daß rings um den Bogen 5 eine dichte Verbindung zwischen den Folien erfolgt.

Bei dem Bogen kann es sich im übrigen auch um eine Fotografie handeln, die dann ebenfalls unzerstörbar eingeschlossen wird.

Das Aufbringen des Klebers erfolgt auf mindestens einem der beiden Folienabschnitte häufchenweise, wobei die Größe und der Abstand eines Häufchens bei etwa einem oder zwei Millimetern liegen.

Die in Fig. 1 dargestellte Anordnung eignet sich insbesondere dann, wenn die Laminiertasche in einem Betrieb verwendet wird. Hier kann man davon ausgehen, daß die beteiligten Personen wissen, in welcher Reihenfolge sie die Folienstücke anordnen sollen.

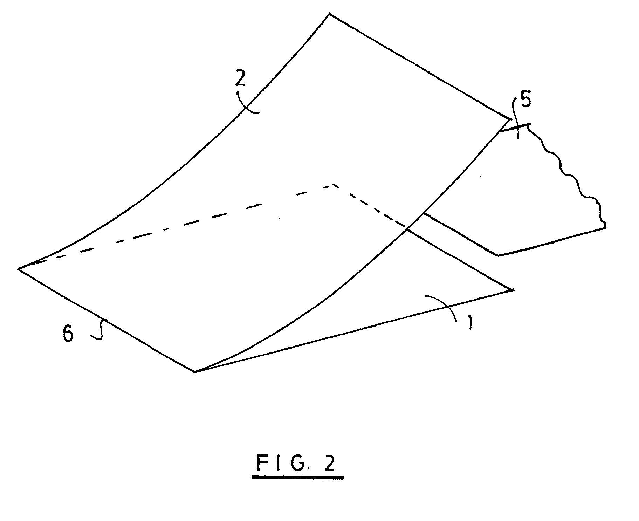

Da die Laminiertaschen aber auch für den Hausgebrauch oder für die Verwendung durch nicht geschulte Personen geeignet sind, wird eine zweite Ausführungsform vorgeschlagen, die schematisch in Fig. 2 dargestellt ist. Es werden der Einfachheit halber die gleichen Bezugszeichen verwendet wie in Fig. 1. Im Unterschied zu der Ausführungsform nach Fig. 1 sind die beiden Folienabschnitte 1, 2 hier längs einer Stirnkante 6 schon miteinander verbunden. Der einzubringende Bogen 5, beispielsweise eine Fotografie, braucht daher nur von der verbundenen Stirnkante 6 abgewandten Seite der zwischen die beiden Stücke Folie eingeschoben zu werden. Anschließend kann die Laminierung in der gleichen Weise erfolgen wie bei der Ausführungsform nach Fig. 1. Eine Laminiertasche, bei der die beiden Abschnitte Folie schon miteinander verbunden sind, hat den Vorteil, daß sie leichter vom Endverbraucher benutzt werden kann.

Die Verbindung kann nicht nur durch das Halten geschehen, sondern auch durch ein Verschweißen oder auch ein Kleben.

## Patentansprüche

1. Verfahren zum Herstellen einer Laminiertasche, bei dem
1.1 ein Heißkleber erwärmt und
1.2 auf eine Seite einer Folie aufgebracht wird,
1.3 der Kleber abgekühlt wird,
1.4 die Folie auf die für die herzustellende Laminiertasche richtige Größe geschnitten und
1.5 zwei gleich große Abschnitte der Folie mit ihren mit Kleber beschichteten Seiten einander zugewandten deckungsgleich angeordnet werden, **dadurch gekennzeichnet, dass**
1.6 die Folie aus einer einzigen Schicht besteht und dass
1.7 der Kleber auf mindestens einem der beiden Folienabschnitte ungleichmäßig aufgetragen wird.

2. Verfahren nach Anspruch 1, bei dem die beiden Folienabschnitte (1, 2) längs einer Kante (6) miteinander verschweißt werden und/oder längs einer Kante (6) miteinander laminiert werden.

3. Verfahren nach Anspruch 1 oder 2, bei dem die beiden Folienabschnitte (1, 2) durch Falten eines doppelt so großen Stücks Folie gebildet werden.

4. Verfahren nach einem der vorhergehenden Ansprüche, bei dem der Kleber häufchenweise oder linienweise aufgetragen wird.

5. Verfahren nach einem der vorhergehenden Ansprüche, bei dem der Kleber abgepudert wird.

6. Verfahren nach einem der vorhergehenden Ansprüche, bei dem als Folie Polypropylen verwendet wird.

7. Verfahren nach einem der vorhergehenden Ansprüche, bei dem als Folie Polyäthylen verwendet wird.

8. Verfahren nach einem der vorhergehenden Ansprüche, bei dem Folien mit einem Elastizitätsmodul von 100 bis 2000 N/mm² verwendet werden.

9. Verfahren nach einem der vorhergehenden Ansprüche, bei dem die Folie derart eingestellt wird, daß sie für UV-Licht undurchlässig ist.

10. Verfahren nach einem der vorhergehenden Ansprüche, bei dem ein wasserlöslicher Kleber verwendet wird.

11. Verfahren nach einem der vorhergehenden Ansprüche, bei dem ein Dispersionskleber verwendet wird.

12. Verfahren nach einem der vorhergehenden Ansprüche, bei dem ein Kleber mit einer Viskosität von 100 bis 2000 mPas verwendet wird.

13. Verfahren nach einem der vorhergehenden Ansprüche, bei dem der Kleber im Rakelverfahren aufgetragen wird.

14. Verfahren nach einem der vorhergehenden Ansprüche, bei dem der Kleber aufgesprüht wird.

15. Verfahren nach einem der vorhergehenden Ansprüche, bei dem der Kleber mit einer Walze aufgetragen wird.

16. Verfahren nach einem der vorhergehenden Ansprüche, bei dem pro m² zwischen 5 und 40 g Kleber aufgetragen werden.

17. Laminiertasche, herstellbar durch das Verfahren nach einem der vorhergehenden Ansprüche.

## Claims

1. Process for producing a laminated bag, wherein
1.1 a hot-melt adhesive is heated and
1.2 applied to one side of a film,
1.3 the adhesive is cooled,
1.4 the film is cut to the correct size for the laminated case to be produced and
1.5 two identically large film portions are congruently arranged with their adhesive-coated sides facing one another,
**characterized in that**
1.6 the film comprises a single layer and
1.7 the adhesive is non-uniformly applied to at least one of the two film portions.

2. Process according to claim 1, wherein the two film portions (1, 2) are welded together along an edge (6) and/or are laminated together along an edge (6).

3. Process according to claim 1 or 2, wherein the two film portions (1, 2) are formed by folding a twice as large piece of film.

4. Process according to one of the preceding claims, wherein the adhesive is applied in small heaps or in lines.

5. Process according to one of the preceding claims, wherein the adhesive is powder-dusted.

6. Process according to one of the preceding claims, wherein polypropylene is used as the film.

7. Process according to one of the preceding claims, wherein polyethylene is used as the film.

8. Process according to one of the preceding claims, wherein use is made of films having a modulus of elasticity of 100 to 2,000 N/mm².

9. Process according to one of the preceding claims, wherein the film is adjusted in such a way that it is impermeable to UV-light.

10. Process according to one of the preceding claims, wherein a water-soluble adhesive is used.

11. Process according to one of the preceding claims, wherein a dispersion adhesive is used.

12. Process according to one of the preceding claims, wherein an adhesive with a viscosity of 100 to 2,000 MPas is used.

13. Process according to one of the preceding claims, wherein the adhesive is applied using a doctor blade method.

14. Process according to one of the preceding claims, wherein the adhesive is sprayed on.

15. Process according to one of the preceding claims, wherein the adhesive is applied with a roller.

16. Process according to one of the preceding claims, wherein between 5 and 40 g of adhesive are applied per m².

17. Laminated case, manufacturable by the process according to one of the preceding claims.

## Revendications

1. Un procédé de fabrication d'une pochette de plastification, où
1.1 un thermoadhésif est chauffé et
1.2 une feuille est appliquée sur un côté,
1.3 l'adhésif est refroidi,
1.4 la feuille est coupée à la dimension appropriée pour la pochette de plastification à fabriquer et
1.5 deux sections de dimensions identiques de la feuille avec leurs faces enduites d'adhésifs sont disposées tournées l'une vers l'autre de manière coïncidente, **caractérisée en ce que**
1.6 la feuille se compose d'une seule couche et **en ce que**
1.7 la colle est appliquée de manière irrégulière sur au moins l'une des deux sections de feuille.

2. Procédé selon la revendication 1, où les deux sections de feuille (1, 2) sont soudées le long d'un bord (6) l'une à l'autre et/ou sont laminées l'une à l'autre le long d'un bord (6).

3. Procédé selon la revendication 1 ou 2, où les deux sections de feuille (1, 2) sont formées par pliage d'un morceau de la feuille deux fois plus gros.

4. Procédé selon l'une des revendications précédentes, où la colle est appliquée par petit tas ou par lignes.

5. Procédé selon l'une des revendications précédentes, où la colle est saupoudrée.

6. Procédé selon l'une des revendications précédentes, où on utilise du polypropylène pour la feuille.

7. Procédé selon l'une des revendications précédentes, où en tant que feuille on utilise du polyéthylène.

8. Procédé selon l'une des revendications précédentes, où des feuilles utilisées présentent un module d'élasticité de 100 à 2000 N/mm².

9. Procédé selon l'une des revendications précédentes, où la feuille est configurée de manière à ne pas laisser passer la lumière UV.

10. Procédé selon l'une des revendications précédentes, où on utilise une colle soluble dans l'eau.

11. Procédé selon l'une des revendications précédentes, où une colle à dispersion est utilisée.

12. Procédé selon l'une des revendications précédentes, où une colle présentant une viscosité de 100 à 2000 mPas est utilisée.

13. Procédé selon l'une des revendications précédentes, où la colle est appliquée par étalement à la racle.

14. Procédé selon l'une des revendications précédentes, où la colle est pulvérisée.

15. Procédé selon l'une des revendications précédentes, où la colle est appliquée au rouleau.

16. Procédé selon l'une des revendications précédentes, où 5 à 40 g de colle sont appliqués au m².

17. Pochette de plastification pouvant être fabriquée par le procédé selon l'une des revendications précédentes.
